# EUROPEAN PATENT APPLICATION

(11) **EP 1 688 525 A1**
(43) Date of publication of application: **09.08.2006**
(21) Application number: 05254752.8
(22) Date of filing: 29.07.2005
(51) Int. Cl.: D06F 37/20, D06F 37/26

(54) **Drum washing machine with balance weight**

(30) Priority: 05.02.2005 KR 2005011026
(71) Applicant: Samsung Electronics Co., Ltd, Suwon-si, Gyeonggi-do (KR)
(72) Inventor: Namkung, Koan Seog, 210-1403, HyunDai 2nd APT., Hwasung-Si, Gyeonggi-Do (KR); Jeong, Ji Deok, 113-1801, Dongsuwon LG Village, Suwon-Si, Gyeonggi-Do (KR); Roh, Hyoung Hoon, 201-104, Dongsuwon LG Village, Suwon-si, Gyeonggi-Do (KR)
(74) Representative: Brandon, Paul Laurence

(57) **Abstract**

A drum washing machine which reduces the number of balance weights installed on the rear surface of a tub (11), and prevents the tub (11) from being cracked due to eccentric rotation. The drum washing machine includes a bearing housing (50) installed on the tub (11) for supporting a rotary shaft (30); and a bearing housing bracket (60) fixing the bearing housing (50) to the tub (11), and serving as a balance weight for reducing vibration generated due to the eccentric rotation of a rotary drum (12). The drum washing machine further includes a balance weight (70) detachably attached to the tub (11) separately from the bearing housing bracket (60). The bearing housing bracket (60) may be made of cast iron. The weight of the bearing housing bracket (60) may be at least three times the weight (70) of the balance weight. The thickness of the bearing housing bracket is gradually reduced from an opening to an edge portion.

## Description

The present invention relates to drum washing machines.

Generally, a drum washing machine washes laundry by rotating a rotary drum using the rotary force of a driving motor, and dehydrates the laundry by rotating the rotary drum at a high speed. The dehydration of the laundry in the drum washing machine is achieved by centrifugally separating moisture from the laundry by means of centrifugal force applied to the laundry in the drum washing machine by rotating the rotary drum at the high speed. During the dehydration, which is achieved by the high-speed rotation of the rotary drum, any partial imbalance of the laundry in the rotary drum generates severe vibration and noise. In order to prevent the generation of noise, balance weight devices are installed in the drum washing machine. Generally, the balance weight devices are respectively fixed to the front and rear surfaces of a tub by bolts.

Korean Utility Model Publication No. 20-0145371 discloses a drum washing machine, in which balance weight devices are respectively installed on the front and upper surfaces of a tub.

Since a plurality of the balance weight devices are installed on the front and upper surfaces of the tub, the number of components of the drum washing machine is increased, and the number of steps of an assembly process of the drum washing machine is thus increased, thereby reducing efficiency in assembling the drum washing machine.

Although the balance weight devices are installed in the drum washing machine, when a rotary drum is rotated at a high speed, the rotary drum can be eccentrically rotated by the weight of laundry therein, thereby causing distortion of a bearing housing supporting a rotary shaft. When the distortion is transmitted to the tub, the tub may crack or be otherwise damaged.

Further, since a plurality of the balance weight devices are installed on the tub, it is difficult to maintain the balance of weights between left and right sides of the tub.

An aim of preferred embodiments of the invention is to provide a drum washing machine which can be efficiently assembled.

Another aim of preferred embodiments of the invention is to provide a drum washing machine with a decreased the degree of eccentric rotation of a rotary drum.

Yet another aim of preferred embodiments of the invention is to provide a drum washing machine in which the distribution of weight between left and right sides of a tub can be easily balanced.

An apparatus according to a first aspect of the present invention provides a drum washing machine comprising a tub; a rotary drum installed in the tub; a rotary shaft extended from the rotary drum to the outside of the tub by passing through the tub; a bearing housing installed on the tub for supporting the rotary shaft; and a bearing housing bracket fixing the bearing housing to the tub, and serving as a balance weight for reducing vibration generated due to eccentric rotation of the rotary drum.

The drum washing machine may further comprise a separate balance weight detachably attached to the tub separately from the bearing housing bracket.

Further, the bearing housing bracket and the separate balance weight may be installed on the rear surface of the tub.

Moreover, the weight of the bearing housing bracket may be at least three times the weight of the separate balance weight.

The bearing housing bracket may be made of cast iron.

The bearing housing bracket includes an opening formed through the central portion thereof for passing the bearing housing; and an edge portion, through which a plurality of fixing holes are formed so that the bearing housing bracket is fixed to the rear surface of the tub by fasteners passing through the fixing holes.

The thickness of the bearing housing bracket may be gradually reduced from the opening to the edge portion.

Further, the tub may be fixed to a housing so that the tub is downwardly inclined from the front surface of the tub to the rear surface of the tub.

Moreover, the bearing housing and the bearing housing bracket may be unitarily formed.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a longitudinal sectional view of a drum washing machine according to a first embodiment of the present invention;
FIG. 2 is an exploded perspective view illustrating the connection structure between a bearing housing and a bearing housing bracket of the drum washing machine of FIG. 1;
FIG. 3 is a perspective view of the bearing housing and the bearing housing bracket of the drum washing machine of FIG. 1 in a state in which the bearing housing and the bearing housing bracket are connected;
FIG. 4 is a sectional view illustrating a first connection structure between a bearing housing and a bearing housing bracket for use with a drum washing machine in accordance with an embodiment of the present invention; and
FIG. 5 is a sectional view illustrating a second connection structure between a bearing housing and a bearing housing bracket in accordance with a second embodiment of the present invention.

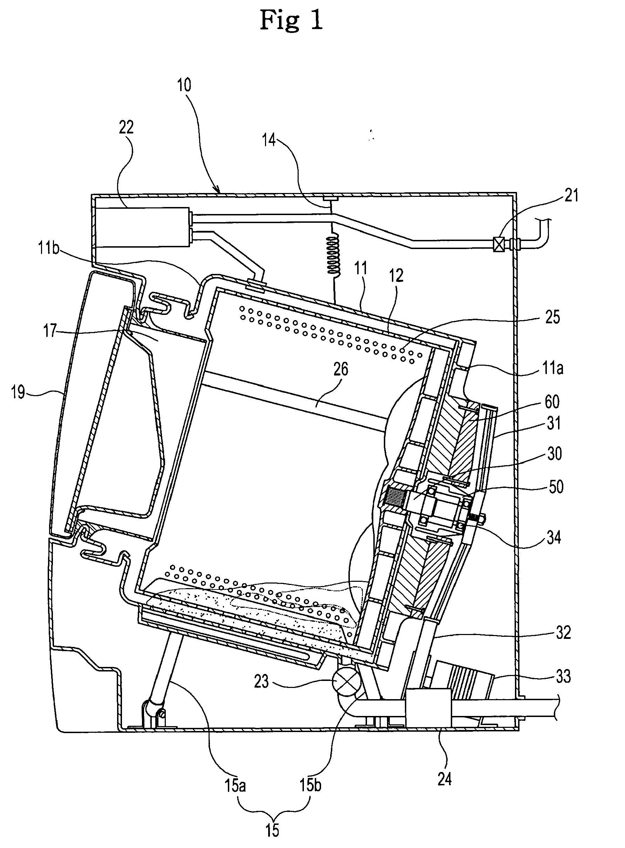

FIG. 1 shows a drum washing machine according to a first embodiment of the present invention, comprising a housing 10 forming the external appearance of the drum washing machine, a tub 11 installed in the housing 10 for containing washing water, and a rotary drum 12 rotatably installed in the tub 11 for washing laundry placed therein.

The tub 11, which is installed in the housing 10 for containing the rotary drum 12 having a cylindrical structure, is fixed to the housing 10 through suspension springs 14 and suspension arms 15. Both side surfaces of the tub 11 are fixed to the upper part of the housing 10 by two suspension springs 14, and the lower part of the tub 11 is elastically supported by four suspension arms 15 and fixed to the lower part of the housing 10. The length of the front suspension arms 15a for supporting the lower part of the front portion of the tub 11 is longer than the length of the rear suspension arms 15b for supporting the lower part of the rear portion of the tub 11, so that the tub 11 is fixed to the housing 10 under the condition that the tub 11 is downwardly inclined from the front surface 11b of the tub 11 to the rear surface 11a of the tub 11.

The above-described inclined structure of the tub 11 assists a user to take laundry out of the tub 11, and concentrates the weight onto a rotary shaft 30 rotating and supporting the rotary drum 12, thereby reducing the degree of eccentric rotation of the rotary drum 12 when the rotary drum 12 is rotated.

An opening 17, through which laundry is inserted into the rotary drum 12, is formed through the front surface of the housing 10, and a door 19 for opening and closing the opening 17 is installed at the opening 17. A water supply valve 21 for controlling the supply of water and a detergent supply device 22 for supplying a detergent to the inside of the tub 11 are installed above the tub 11, and a drainage valve 23 opened and closed for discharging water in the tub 11 and a drainage pump 24 for forcibly discharging the water in the tub 11 to the outside are installed below the tub 11.

A plurality of through-holes 25 for circulating washing water therethrough are formed through the cylindrical surface of the rotary drum 12, and a plurality of lifters 26 for lifting the laundry in the rotary drum 12 and then dropping the laundry are installed on the inner surface of the rotary drum 12.

The rotary shaft 30 fixed to the central portion of the rear surface of the rotary drum 12 is supported by the rear surface of the tub 11, thereby allowing the rotary drum 12 to be rotated in the tub 11. The rear end of the rotary shaft 30 is fixed to a pulley 31, and the pulley 31 is connected to a driving motor 33 installed in the lower portion of the housing 10 by a belt 32. Thereby, the driving force of the driving motor 33 is transmitted to the rotary shaft 30.

A bearing housing 50, which contains a bearing member 34 located at the inner cylindrical surface thereof for simultaneously supporting and passing the rotary shaft 30 under the condition that the rotary shaft 30 is rotatable, is installed on the rear surface of the tub 11. In order to firmly attach the bearing housing 50 to the tub 11, a bearing housing bracket 60 intervening therebetween is utilized.

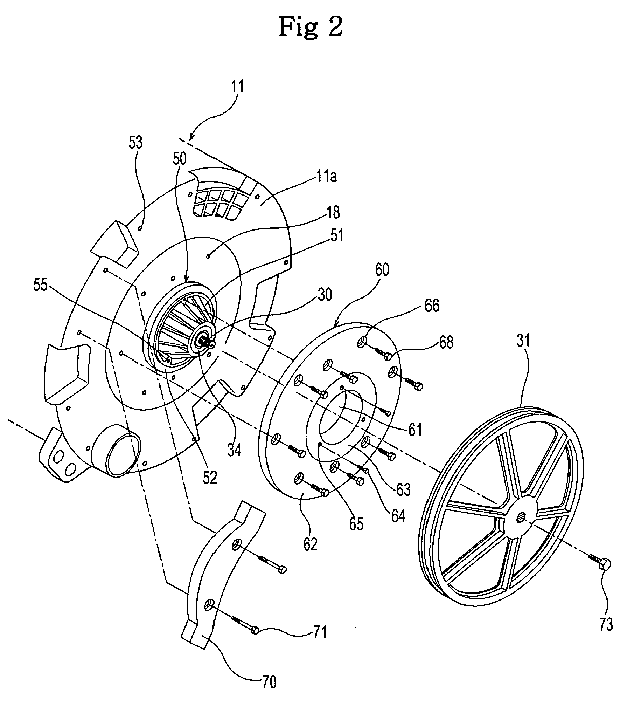

Hereinafter, with reference to FIGS. 2 to 5, the connection structure between the bearing housing 50 and the tub 11 through the bearing housing bracket 60, and the characteristics of the bearing housing bracket 60 will be described in detail.

As shown in FIG. 2, the bearing housing 50, which contains the bearing member 34 located at the inner cylindrical surface thereof for simultaneously supporting and passing the rotary shaft 30 under the condition that the rotary shaft 30 is rotatable, is installed on the central portion of the rear surface 11a of the tub 11.

The bearing housing 50 includes a body portion 51 protruded from the rear surface 11a of the tub 11 for containing the bearing member 34, and a fringe portion 52 which abuts the rear surface 11 a of the tub 11.

The bearing housing bracket 60 has a disk shape such that an opening 61 for passing the body portion 51 of the bearing housing 50 is formed through the central portion of the bearing housing bracket 60. A plurality of fixing holes 65 are formed through a connection portion 63 formed around the opening 61 so that the connection portion 63 is fixed to the fringe portion 52 through the fixing holes 65, and a plurality of fixing holes 66 are formed through an edge portion 62 of the bearing housing bracket 60 so that the edge portion 62 is fixed to the rear surface 11a of the tub 11 through the fixing holes 66.

In order to fix the bearing housing bracket 60 to the rear surface 11a of the tub 11, the body portion 51 of the housing 50 passes through the opening 61 of the bearing housing bracket 60, and the fixing holes 65 formed through the connection portion 63 of the bearing housing bracket 60 and fixing holes 55 formed through the fringe portion 52 of the bearing housing 50 are connected by fasteners such as bolts 64, thereby connecting the bearing housing 50 and the bearing housing bracket 60.

When the bearing housing 50 and the bearing housing bracket 60 are fixed to each other as described above, a plurality of the fixing holes 66 formed through the edge portion 62 of the bearing housing bracket 60 coincide with a plurality of fixing holes 18 formed through the rear surface 11a of the tub 11, thereby being easily connected to the fixing holes 18 by fasteners such as bolts 68.

By fixing the bearing housing 50 and the bearing housing bracket 60 to each other and fixing the bearing housing bracket 60 and the rear surface 11a of the tub 11 to each other as described above, the bearing housing 50 can be firmly fixed to the tub 11.

Under the condition that the bearing housing bracket 60 is fixed to the tub 11, the rotary shaft 30 is inserted into the pulley 31, and a bolt 73 is inserted into the rotary shaft 30. Thereby, the rotary shaft 30 and the pulley 31 are fixed to each other so that the pulley 31 is not separated from the rotary shaft 30.

The bearing housing bracket 60 of the drum washing machine of the present invention serves to connect the bearing housing 50 to the tub 11. When the rotary drum 12 is rotated at a high speed in a dehydration operation, laundry may lean to one side, causing the rotary drum 12 to be eccentrically rotated due to the lean of the laundry, thereby generating severe vibration and noise. Here, the bearing housing bracket 60 further serves as a balance weight for applying weight to the tub 11 so as to prevent the generation of vibration. In order to serve as the balance weight, the bearing housing bracket 60 should have at least a designated weight. In this embodiment of the present invention, the weight of the housing bracket 60 is set to 6kg±200g. In order to have a weight of approximately 6kg, the bearing housing bracket 60 has a considerable thickness. In order to have such a thickness, preferably, but not necessarily, the bearing housing bracket 60 is manufactured by casting. Further, since the bearing housing bracket 60 requires a low volume and a high weight, the bearing housing bracket 60 is made of a material having high specific gravity. Preferably, but not necessarily, the bearing housing bracket 60 is made of cast iron having excellent castability and a specific gravity of approximately 7.5.

A balance weight 70 prepared separately from the bearing housing bracket 60 is detachably attached to the rear surface 11a of the tub 11 by bolts 71.

Both the bearing housing bracket 60 serving as a balance weight and the balance weight 70 are attached to the rear surface 11 a of the tub 11. The tub 11 is stabilized by concentrating the heavy members 60 and 70, serving as balance weights, on the rear surface 11 a of the tub 11. The above structure causes the tub 11 to be fixed to the housing 10 under the condition that the tub 11 is downwardly inclined such that the rear surface 11 a of the tub 11 is lower than the front surface 11b of the tub 11.

Further, the degree of eccentric rotation of the rotary drum 12, which is generated when the rotary drum 12 is rotated, is decreased by locating the gravity center of the tub 11 close to the rotary shaft 30 rotating and supporting the rotary drum 12.

When the rotary drum 12 is rotated at a high speed, the rotary drum 12 can be eccentrically rotated by the partial disposition of laundry therein, thereby causing distortion of the bearing housing 50 supporting the rotary shaft 30. Conventionally, when the distortion is transmitted to the tub 11, the rear surface 11a of the tub 11 is cracked. However, in the exemplary embodiment of the present invention, the heavy bearing housing bracket 60 and balance weight 70 are installed on the central portion of the rear surface 11 a of the tub 11 at the center of the rotary shaft 30, thereby reducing the degree of eccentric rotation of the rotary drum 12 and preventing cracking of the rear surface 11a of the tub 11.

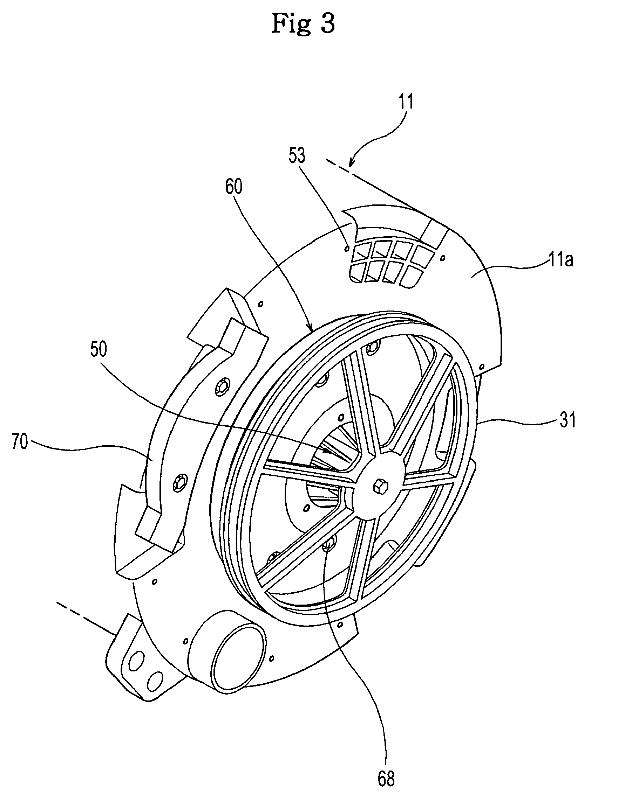

FIG. 3 is a perspective view of the bearing housing and the bearing housing bracket of the drum washing machine of the present invention in a state in which the bearing housing and the bearing housing bracket are connected.

As shown in FIG. 3, the bearing housing 50 is simply fixed to the rear surface 11a of the tub 11 under the condition that the bearing housing 50 is surrounded with the bearing housing bracket 60. The bearing housing bracket 60 is connected integrally to the rear surface 11a of the tub 11 by a plurality of the bolts 68, thereby preventing cracks generated on the rear surface 11a of the tub 11 by the distortion of the rotary shaft 30 due to the eccentric rotation of the rotary drum 12.

The balance weight 70 is installed at the upper part of the left side of the rear surface 11a of the tub 11. A heavy device, such as a heater (not shown), is typically installed on the right side of the tub 11, so the balance weight 70 serves to maintain the balance of weights between the left and right sides of the tub 11. That is, the balance weight 70 serves to apply weight to the tub 11 for reducing the vibration of the tub 11 and to maintain the balance of weights between the left and right sides of the tub 11.

A plurality of fixing holes 53, which are separated from each other by a designated interval, are formed through the rear surface 11a of the tub 11 so as to change the installation position of the balance weight 70.

In contrast to the above embodiment, if a heavy device is installed on the other side of the tub 11, the balance weight 70 is installed on the opposite side of the tub 11 from the heavy device for maintaining the balance of weights between both sides of the tub 11.

In the present invention, the bearing housing bracket 60 serves as a main balance weight, and the balance weight 70 provided separately from the bearing housing bracket 60 serves to assist the function of the bearing housing bracket 60 and to maintain the balance of weights between the left and right sides of the tub 11. For this reason, preferably, but not necessarily, the weight of the bearing housing bracket 60 is at least three times the weight of the balance weight 70.

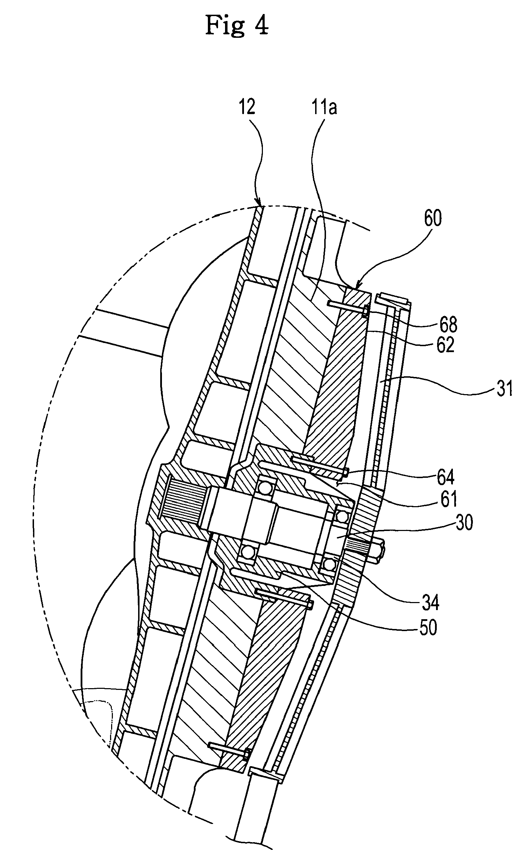

FIG. 4 is a sectional view illustrating a first connection structure between the bearing housing and the bearing housing bracket in a washing machine in accordance with an embodiment of the present invention.

As shown in FIG. 4, in order to integrally fix the bearing housing 50, the bearing housing bracket 60, and the rear surface 11a of the tub 11, the bearing housing 50 is inserted into the rear surface 11 a of the tub 11. Thereafter, the bearing housing bracket 60 is fixed to the bearing housing 50 using the bolts 64. Finally, the bearing housing bracket 60 is connected to the rear surface 11a of the tub 11 using the bolts 68. Thereby, the fixation of the above three members is completed.

As shown in FIG. 4, the thickness of the bearing housing bracket 60 is gradually reduced from the opening 61 to the edge portion 62. This reduced thickness of the bearing housing bracket 60 concentrates the weight thereof at a portion close to rotary shaft 30, thereby reducing the degree of eccentric rotation of the rotary drum 12.

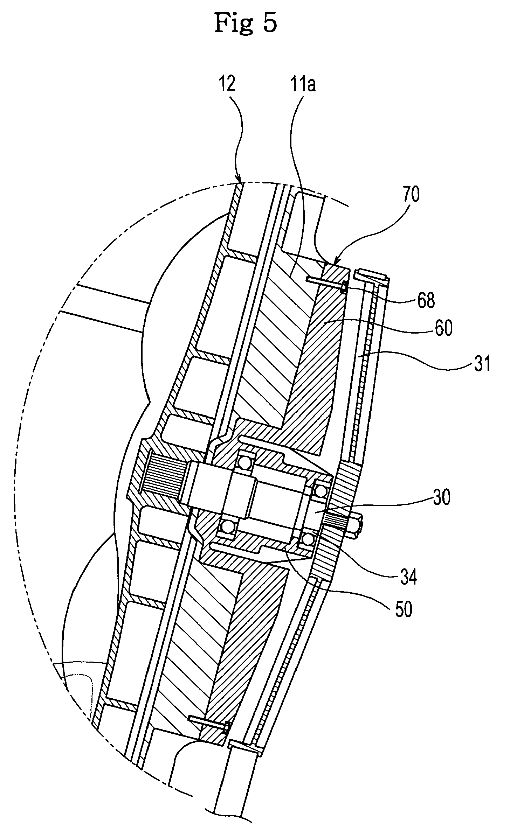

FIG. 5 is a sectional view illustrating a second connection structure between the bearing housing and the bearing housing bracket in a washing machine in accordance with an embodiment of the present invention.

As shown in FIG. 5, the bearing housing 50 and the bearing housing bracket 60 serving as a balance weight are unitarily formed as one piece. By forming an assembly 70 obtained by unitarily assembling the bearing housing 50 and the bearing housing bracket 60, it is possible to omit components, such as bolts for connecting the two members 50 and 60, thereby reducing the number of steps of an assembly process of the washing machine, thus improving productivity.

As apparent from the above description, preferred embodiments of the present invention provide a drum washing machine, in which a bearing housing bracket serves as a balance weight, thereby reducing the number of balance weights attached to a tub, thus reducing the number of steps of an assembly process and improving efficiency in assembling the drum washing machine, compared to a conventional drum washing machine.

Further, preferred embodiments of the drum washing machine of the present invention cause the center of gravity of the tub to be close to a rotary shaft, thereby decreasing the degree of eccentric rotation of a rotary drum.

Moreover, by using a balance weight detachably attached to the rear surface of the tub, the balance of weights between the left and right sides of the tub can be easily maintained.

Although exemplary embodiments of the invention have been shown and described, it will be appreciated by those skilled in the art that changes may be made in these embodiments without departing from the principles of the invention, the scope of which is defined in the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A drum washing machine comprising:
a tub (11);
a rotary drum (12) installed in the tub (11);
a rotary shaft (30) extended from the rotary drum (12) to the outside of the tub (11) by passing through the tub (11);
a bearing housing (50) installed on the tub (11) for supporting the rotary shaft (30);
and
a bearing housing bracket (60) fixing the bearing housing (50) to the tub (11), and serving as a balance weight for reducing vibration generated due to eccentric rotation of the rotary drum (12).

2. The drum washing machine as set forth in claim 1, further comprising a separate balance weight (70) detachably attached to the tub (11) separately from the bearing housing bracket (60).

3. The drum washing machine as set forth in claim 2, wherein the bearing housing bracket (60) and the separate balance weight (70) are installed on the rear surface (11a) of the tub (11).

4. The drum washing machine as set forth in claim 2 or 3, wherein the weight of the bearing housing bracket (60) is at least three times the weight of the separate balance weight (70).

5. The drum washing machine as set forth in claim 1, 2, 3, or 4 wherein the bearing housing bracket (60) is made of cast iron.

6. The drum washing machine as set forth in any preceding claim, wherein the bearing housing bracket (60) includes:
an opening (61) formed through the central portion thereof for passing the bearing housing (50); and
an edge portion (62), through which a plurality of fixing holes (66) are formed so that the bearing housing bracket (60) is fixed to a rear surface (11a) of the tub by fasteners (68) passing through the fixing holes (66).

7. The drum washing machine as set forth in any preceding claim, wherein a thickness of the bearing housing bracket (60) is gradually reduced from the opening to the edge portion (62).

8. The drum washing machine as set forth in any preceding claim, wherein the tub (11) is fixed to a housing (10) so that the tub is downwardly inclined from a front surface (116) of the tub (11) to a rear surface (11a) of the tub (11).

9. The drum washing machine as set forth in any preceding claim, wherein the bearing housing (50) and the bearing housing bracket (60) are unitarily formed.
